# EUROPEAN PATENT APPLICATION

(11) **EP 1 612 373 A2**
(43) Date of publication of application: **04.01.2006**
(21) Application number: 05253428.6
(22) Date of filing: 03.06.2005
(51) Int. Cl.: F01D 5/14

(54) **Adaptable fluid-foil**

(30) Priority: 02.07.2004 GB 0414874
(71) Applicant: ROLLS-ROYCE PLC, London, SW1E 6AT (GB)
(72) Inventor: Webster, John Richard, Derby, DE23 6AF (GB); Peng, Caetano, Shardlow Derby DE72 2GZ (GB)
(74) Representative: Gunn, Michael Alan

(57) **Abstract**

An adaptable fluid-foil (12, 14) comprising at least two panels (60, 62), the panels (60, 62) are joined at opposing edges (50, 56), in use, a fluid passes over at least part of one of the panels (60, 62) characterised in that a panel (60, 62) comprises a shape memory element (70), the shape memory element (70) is arranged to change the shape of the fluid-foil between a first shape and a second shape, so that in use, the first shape (50) is optimal for a first fluid flow condition and the second shape (50') is optimal for a second fluid flow condition.

## Description

The present invention relates to an adaptable fluid-foil for interaction with a fluid flow capable of changing shape to maintain fluid efficiency over a range of fluid flow conditions. In particular, although not exclusively, such an adaptable fluid-foil is an aerofoil for a gas turbine engine.

It is well known that compressor and turbine rotor and stator assemblies of gas turbine engines comprise an annular array of radially extending aerofoils. These aerofoils are usually constructed from stiff, strong materials that meet various and complex in flight performance criteria. Conventionally, the shape of an aerofoil is designed so that at associated aircraft cruise flight conditions its aerodynamic shape is optimal so to provide the most efficient operating condition, thereby minimising fuel consumption. At other engine conditions, the aerodynamic shape of aerofoils is not operationally as efficient. This efficiency may be either in terms of fuel consumption or a loss in propulsive thrust of the engine, or both.

It is also known that the angle of stator vanes, relative to the impinging air flow direction, may be changed throughout an aircraft flight cycle. However, although such an angle change is beneficial in providing an improved air flow regime through the engine, the mechanisms used carry a severe weight penalty and are known to fail during operation.

Furthermore, it is has been disclosed by Ahrens, M., in "structural integration of shape memory alloys for turbomachinery applications", SPIE Conference on Industrial and Commercial Applications of Smart Structures Technologies, Newport Beach, California, March 1999, SPIE volume 3674 pp426-435, that shape memory alloy (SMA) wires may be applied to an airfoil and used as the muscle to change airfoil shape, to adapt the shape optimally over a large operating range. It is recited that the most versatile manufacturing method is probably to adhesively bond the SMA wire into the structure. However, for fluid-foils such as aerofoils or propellers, adhesive bonding is not sufficient means for attachment to the foil structure and is not capable of providing adequate structural strength for desired change shape. Intimate contact of the SMA and parent structure means that during shape change, the parent structure must undergo similar strains to the SMA element. SMA materials are operable in the region of 1-2% strain, whereas conventional metals are only capable of 0.2% to give a reasonable service life.

Therefore it is an object of the present invention to provide an aerofoil structure that is mission adaptive throughout the flight cycle of the engine and associated aircraft.

According to a first aspect of the present invention provides an adaptable fluid-foil comprising at least two panels, the panels are joined at opposing edges, in use, a fluid passes over at least part of one of the panels characterised in that a panel comprises a shape memory element, the shape memory element is arranged to change the shape of the fluid-foil between a first shape and a second shape, so that in use, the first shape is optimal for a first fluid flow condition and the second shape is optimal for a second fluid flow condition.

Preferably, the fluid-foil comprises a core structure between the panels, the core structure capable of maintaining a space between the panels.

Preferably, the core structure comprises a Warren truss structure.

Alternatively, the core structure comprises at least one web member arranged substantially perpendicular to the panels.

Alternatively a panel substantially comprises shape memory material or the panel substantially comprises the shape memory element.

Alternatively, a panel comprises the shape memory element in a leading edge portion of the fluid-foil and or the shape memory element in a trailing edge portion of the fluid-foil.

Alternatively the panel comprises the shape memory element in a radially outward portion of the fluid-foil.

Alternatively, the shape memory element defines a substantially triangular portion.

Alternatively, the shape memory element defines a substantially rectangular portion.

Alternatively, a panel comprises a parent panel and attached to the parent panel is the shape memory element.

Alternatively, the parent panel is thinner than the shape memory element.

Preferably, the shape memory element is disposed outwardly of the parent panel.

Preferably, the shape memory element defines a fluid flow conduit capable of conveying fluid at a temperature to effect a modulus change of the SM element.

Preferably, the core structure partly defines a fluid flow conduit capable of conveying fluid at a temperature to effect a modulus change of the SM element.

Preferably, a temperature regulated supply of fluid and means to regulate the supply is provided.

Preferably, the fluid-foil comprises any one of the group comprising a blade, a vane, rudder, hydrofoil and a propeller.

Preferably, the fluid comprises any one of the group comprising gas and liquid.

Preferably, the first shape has a camber less than the second shape.

Preferably, the first shape has a camber greater than the second shape.

Preferably, the first fluid flow condition comprises a higher Mach number that the second fluid flow condition.

Alternatively, the first fluid flow condition comprises a lower Mach number that the second fluid flow condition.

In another aspect of the present invention, there is provided an adaptable gas turbine engine comprising a fluid-foil as set out in any of the preceding paragraphs.

In yet another aspect of the present invention, there is provided a method of operating an adaptable fluid-foil comprising at least two panels, the panels are joined at opposing edges, in use, a fluid passes over at least part of one of the panels characterised in that a panel comprises a shape memory element, the method comprising the step of varying the temperature of the shape memory element to change its modulus so that the shape of the fluid-foil changes between a first shape and a second shape, so that, the first shape is optimal for a first fluid flow condition and the second shape is optimal for a second fluid flow condition.

Preferably, the method of operating an adaptable fluid-foil further comprises features of the adaptable fluid-foil as set out in the preceding paragraphs.

In still a further aspect of the present invention, there is provided a method of repairing an adaptable fluid-foil comprising at least two panels, the panels are joined at opposing edges, in use, a fluid passes over at least part of one of the panels characterised in that a panel comprises a shape memory element, the shape memory element is arranged to change the shape of the fluid-foil between a first shape and a second shape, the method comprising the steps of removing the SM element and replacing the SM element with an undamaged SM element.

The present invention will be more fully described by way of example with reference to the accompanying drawings in which:
Figure 1 shows a schematic illustration of a gas turbine engine;
Figure 2 and 2A are cross-sections through a blade of the gas turbine engine showing preferred airfoil shapes at different engine operating points;
Figure 3 is a cross-section through a blade in accordance with the present invention;
Figure 4 is an exploded cross-section through a blade in accordance with the present invention;
Figures 5 and 6 are a cross-section through a portion of a blade showing alternative embodiments of present invention;
Figures 7-9 are side elevations of alternative embodiments of a blade (or airfoil) showing the extent of an SM element in accordance with the present invention.

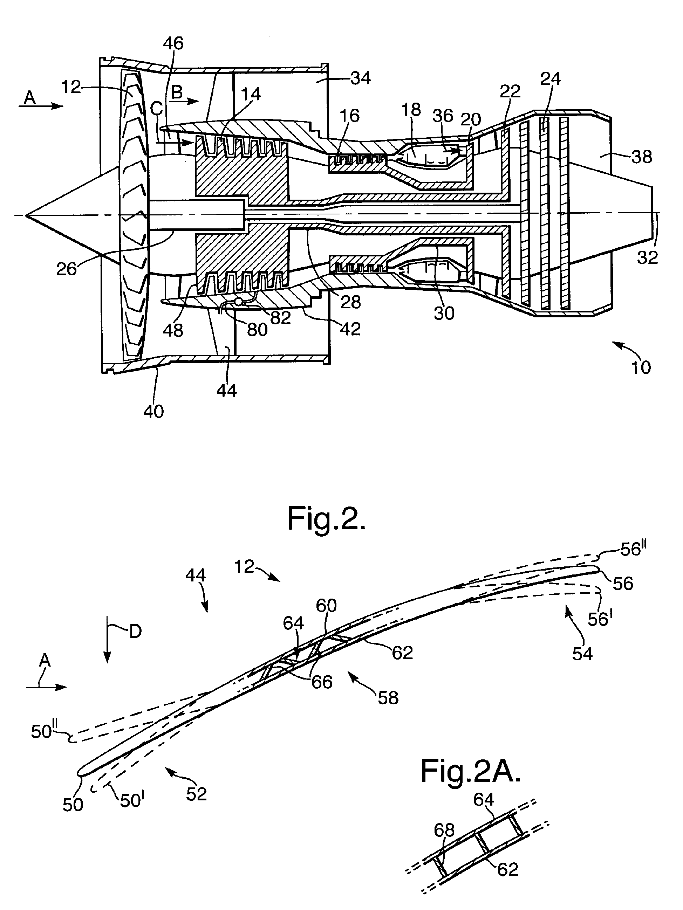

Referring to figure 1 an example of a gas turbine engine 10 comprises a fan 12 having an annular array of fan blades 12, an intermediate pressure compressor 14, a high pressure compressor 16, a combustor 18, a high pressure turbine 20, an intermediate pressure turbine 22 and a low pressure turbine 24 arranged in flow series. The fan 12 is drivingly connected to the low pressure turbine 24 via a fan shaft 26; the intermediate pressure compressor 14 is drivingly connected to the intermediate pressure turbine 22 via a intermediate pressure shaft 28; and the high pressure compressor 16 is drivingly connected to the high pressure turbine 20 via a high pressure shaft 30. In operation the fan 12, compressors 14, 16, turbines 20, 22, 24 and shafts 26, 28, 30 rotate about a common engine axis 32. Air, which flows into the gas turbine engine 10 as shown by arrow A, is compressed and accelerated by the fan 12. A first portion B of the compressed air exiting the fan 12 flows into and within an annular bypass duct 34 exiting the downstream end of the gas turbine engine 10 and providing part of the forward propulsive thrust produced by the gas turbine engine 10. A second portion C of the air exiting the fan 12 flows into and through the intermediate pressure 14 and high pressure 16 compressors where it is further compressed. The compressed air flow exiting the high pressure compressor 16 then flows into the combustor 18 where it is mixed with fuel and burnt to produce a high energy and temperature gas stream 36. This high temperature gas stream 36 then flows through the high pressure 20, intermediate pressure 22, and low pressure 24 turbines which extract energy from the high temperature gas stream 36, rotating the turbines 20, 22, 24 and thereby providing the driving force to rotate the fan 12 and compressors 14, 18 connected to the turbines 20, 22, 24. The high temperature gas stream 36, which still possesses a significant amount of energy and is travelling at a significant velocity, then exits the engine 10 through an exhaust nozzle 38 providing a further part of the forward propulsive thrust of the gas turbine engine 10. As such the operation of the gas turbine engine 10 is conventional and is well known in the art.

A bypass casing 40 forms the radially outer part of the bypass duct 34 and surrounds the fan 12. The radially inner part of the bypass duct 34 is defined by a core engine casing 42. An annular array of outlet guide vanes (OGVs) 44 supports the bypass casing 40. The fan 12 imparts a swirl to the airflow B and it is a primary object for the OGVs 44 to straighten this airflow B that passes through the bypass duct 34.

The portion C of airflow A that enters the IP compressor 14 first passes through an annular array of inlet guide vanes (IGVs) 46. The IGVs 46 direct the airflow so that its angle of incidence to each blade of an annular array of rotor blades 48 of the IP compressor 14 is optimal for a particular engine speed condition. Furthermore, between each rotor stage of each of the compressors 14, 16 and turbines 20, 22, 24 there is an annular array of vanes. These vanes, similarly, direct the flow of gasses passing through the array of vanes at a beneficial angle of incidence on to the downstream blades of an annular array of blades making up each rotor stage.

It should be appreciated to one skilled in the art that all blades and vanes comprise a fluid flow or aerofoil portion and may be collectively termed aerofoils for the simplicity herein.

Referring now to figure 2, an exemplary embodiment of the present invention will be discussed with reference to a fan blade 12 which is one of the annular array of fan blades 12, however, it is not intended that the present invention is restricted to a rotor blade, but also may be applied to stator vanes and propellers, which are associated to either axial or centrifugal fluid flow machines of gas turbine engines or propellers of ships and the like.

The blade 12 comprises a leading edge portion 52 having a leading edge 50, a trailing edge portion 54 having a trailing edge 56 and a mid portion 58. The blade 12 is constructed with two panels, a suction side panel 60 and a pressure side panel 62 joined at the leading and trailing edges 50, 56 and held apart therebetween by a core structure 64. In cross-section the panels 60, 62 and the core structure 64 are arranged in a Warren girder-type structure having angled members 66 which are capable of transferring shear forces between the panels 60, 62. Alternatively, as shown in Fig 2A, the core 64 may comprise members 68 which are substantially perpendicular to the panels 60, 62. Furthermore the core structure 64 may comprise a solid material or a cellular material as known in the art.

Arrow D indicates the direction of rotation of the blade 12 relative to the airflow A entering the engine 10. Figure 2 is a cross-section through a radially outer part of the blade 12 where the relative velocity of the blade 12 to the airflow A is greatest. The Mach number, herein referred to, is the relative velocity between the blade and airflow A, which is dependent on the rotational speed of the blade, the angle of the air impinging onto the blade and the forward velocity of the engine 10.

Conventional blade geometry is optimised with consideration to aerodynamic and structural operability and for greatest overall efficiency the solid lines in Fig 2 outline typical fixed geometry. This conventional configuration is suitable where the Mach number is between 1.3 and 1.5. However, where the Mach number is lower, say between 1.1 and 1.3 it would be preferable for the blade to assume the position 50" and 56" at the leading and trailing edges respectively. Here the camber of the blade 12 is reduced which imparts less work on the airflow and also reduces shock losses. Where the Mach number is higher, say between 1.5 and 1.6 it would be preferable for the blade to assume the position 50' and 56' at the leading and trailing edges respectively. Here the camber of the blade 12 is increased to impart more work on the airflow and where shock losses are not so significant. In this way the working capacity of the rotating blade array 12 is matched to its working line. For an explanation of the fan rotor or stator operability and working lines and what engine conditions give rise to certain Mach numbers see "Gas Turbine Performance", by Walsh P.P and Fletcher P., Blackwell Science ltd, 1998.

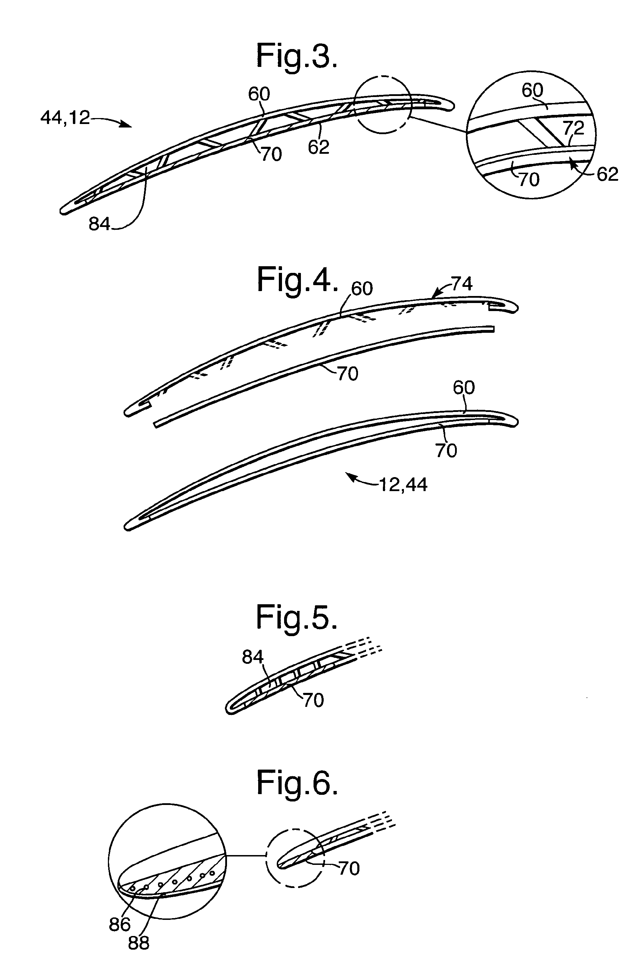

In the case of a vane 44, one of the annular array of outlet guide vanes 44 for example, the angle between the airflow and the vane or 'swirl angle' is preferably variable as the airflow from an upstream rotor changes during the operating cycle of the engine. Where there is a high inlet swirl angle the leading edge is in position 50' and where there is a lower inlet swirl angle the leading edge is in position 50.
Referring now to Figures 3 and 4, the blade 12, vane 44 or propeller or other aerofoil comprises a shape memory element 70 capable of changing its elastic modulus in response to a change in its temperature. The blade 12 is manufactured with a spring component 74, substantially comprising the suction side panel 60, and the SM element 70. The complete blade 12 has a camber and blade shape as position 50, 56 in Figure 2. Independently, the spring component 74 has a camber less than the complete blade camber 50, 56 and the SM element has a camber greater than the complete blade camber 50, 56. In position 50, 56 the SM element 70 has a relatively low modulus, when heated passed its switch temperature the SM element increases significantly in modulus, thereby bending the complete blade 12 to position 50', 56'. Element 70 operates substantially in tension or compression and is separated from the parent structure by pedestals. The spring component (i.e. the parent structure) operates substantially in bending. In this way, large strains are achieved in the SM material to allow best use of its modulus change characteristics whilst maintaining low strains in the parent or spring element. Under external loading (eg. aerodynamic loading), the compound structure acts as a thick beam comprising the SM and spring elements to give the maximum stiffness against these loads and hence the minimum deflection with respect to the applied loads. Thus the SM panel operates (for actuation) substantially in tension or compression and the other parent or spring panel operates substantially in bending. Against external loads, the compound structure operates substantially as a built up structure in bending, although each part will be substantially in tension / compression due to its remoteness from the bending about neutral axis.

Alternatively, the cambers of each independent element 74, 70 may be such that the blade changes shape from 50, 56 to 50'', 56". Here the independent spring component 74 has a camber greater than the complete blade camber 50, 56 and the SM element has a camber less than the complete blade camber 50, 56. In position 50, 56 the SM element 70 has a relatively low modulus, when heated passed its switch temperature the SM element increases significantly in modulus, thereby bending the complete blade 12 to position 50", 56''.

It should be appreciated by the skilled artisan that the blade camber is capable of change between positions 50', 56' and 50", 56", dependent on application and operability requirements. It should be also appreciated that the leading and trailing edge portions 52, 54 may be individually capable of shape or camber change and only one of the leading or trailing edges 52, 54 be employed. The leading and trailing edge portions 52, 54 are also capable of being arranged to change the shape of the blade locally so, for instance, the leading edge 52 is capable of increasing in camber and the trailing edge decrease in camber.

Significantly, either the suction side or the pressure side panel 60, 62 of the blade 12 or vane 44 may comprise an SM element 70.

In the exemplary embodiment referred to in Figures 2-8 the blade 12 parent material, the SM element 70 aside, is substantially constructed from titanium or a titanium alloy as known in the art. The shape memory material comprises any one of a group comprising Titanium, Manganese, Iron, Aluminium, Silicon, Nickel, Copper, Zinc, Silver, Cadmium, Indium, Tin, Lead, Thallium, Platinum. A preferred SM material suitable for use in airfoils comprises a binary NiTi alloy of approximately 50/50% composition. Ternary alloys such as NiTiCu, NiTiHf or NiTiPd will also give enhanced properties and temperature capability in some applications.

Referring back to Figure 3, and in a further embodiment, the panel 62 may comprise a relatively thin panel 72 of parent material for ease of manufacturing the fan blade. The SM element 70 is subsequently attached outwardly of the thin panel 72.

Figure 5 shows an arrangement where the SM element 70 is attached only in the region of the leading (or trailing) edge 52. In this embodiment more subtle camber changes are capable of being made with the advantage that the remainder of the blade 12 is manufactured entirely in the same material.

Figure 6 shows an arrangement where the SM element 70 is attached only in the region of the leading (or trailing) edge 52 outside the core 64 region. This is advantageous as the integrity of the cavity of the blade is improved as bonding two different materials is difficult. The SM element may be attached to the blade via mechanical means or adhesive means such as rivet, clamp, crimp, weld, braze or adhesive. The shape memory element 70 defines a fluid flow conduit 86 capable of conveying fluid at a temperature to effect a modulus change of the SM element 70. Preferably, the temperature controlled fluid flows through the conduit 86 or series of discrete conduits 86 alternately into and out of the plane shown.

Furthermore, and referring to the embodiments of Figures 3-5 and 7-9 the core structure 64 partly defines a fluid flow conduit 84 capable of conveying fluid at a temperature to effect a modulus change of the SM element 70. With reference to Figure 1, the fluid-foil 12, 44 is supplied with a temperature-regulated fluid and means to regulate the supply 80, 82 is provided. In this arrangement heated air from the intermediate compressor is bled and supplied to the vane 44, but may also be supplied to the blade 12.

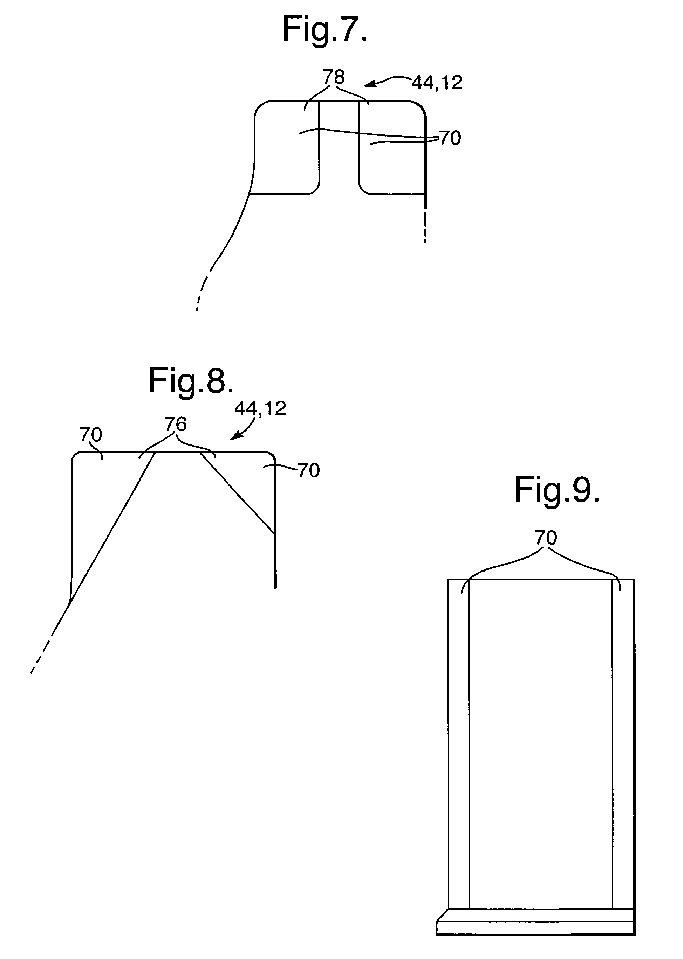

The extent of the SM element 70 is dependent upon the desired amount of blade shape change. Figures 7, 8 show substantially triangular and rectangular patches of SM element 70 respectively and are preferable for a rotor blade where relatively high Mach numbers are more prevalent at the radially outward portions of the blade. Figure 9 comprises the SM element 70 extending substantially the entire radial span of a vane 44 where the relative swirling air inlet angle over the entire span is critical.

In all the embodiments herein described the SM element 70 is capable of being removed and replaced. This is particularly advantageous as certain SM materials are prone to hysteresis as well as more rapid wear than the more durable parent material. Furthermore, it may be desirable to change the composition of the SM material to improve its durability, its thickness, its modulus or other property to improve its structural behaviour.

To improve the operability of the SM element 70, in particular its temperature it is preferable to dispose a thermal barrier coating 88 to the SM element 70 in order to insulate it from adverse temperatures. The coating 88 may also protect the SM element from particulate erosion in use.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An adaptable fluid-foil (12, 14) comprising at least two panels (60, 62), the panels (60, 62) are joined at opposing edges (50, 56), in use, a fluid passes over at least part of one of the panels (60, 62) **characterised in that** a panel (60, 62) comprises a shape memory element (70), the shape memory element (70) is arranged to change the shape of the fluid-foil between a first shape and a second shape, so that in use, the first shape (50) is optimal for a first fluid flow condition and the second shape (50') is optimal for a second fluid flow condition.

2. An adaptable fluid-foil (12, 14) as claimed in claim 1 wherein the fluid-foil comprises a core structure (64) between the panels (60, 62), the core structure (64) capable of maintaining a space between the panels (60, 62).

3. An adaptable fluid-foil (12, 14) as claimed in claim 2 wherein the core structure (64) comprises a Warren truss structure (66).

4. An adaptable fluid-foil (12, 14) as claimed in claim 2 wherein the core structure (64) comprises at least one web member (68) arranged substantially perpendicular to the panels (60, 62).

5. An adaptable fluid-foil (12, 14) as claimed in any one of claims 1-4 wherein a panel (60, 62) substantially comprises shape memory material.

6. An adaptable fluid-foil (12, 14) as claimed in any one of claims 1-5 wherein a panel (60, 62) substantially comprises the shape memory element (70).

7. An adaptable fluid-foil (12, 14) as claimed in any one of claims 1-5 wherein a panel (60, 62) comprises the shape memory element (70) in a leading edge portion (52) of the fluid-foil.

8. An adaptable fluid-foil (12, 14) as claimed in any one of claims 1-5 wherein a panel (60, 62) comprises the shape memory element (70) in a trailing edge portion (54) of the fluid-foil.

9. An adaptable fluid-foil (12, 14) as claimed in any one of claims 1-8 wherein a panel (60, 62) comprises the shape memory element (70) in a radially outward portion of the fluid-foil.

10. An adaptable fluid-foil (12, 14) as claimed in claim 9 wherein the shape memory element (70) defines a substantially triangular portion (76).

11. An adaptable fluid-foil (12, 14) as claimed in claim 9 wherein the shape memory element (70) defines a substantially rectangular portion (78).

12. An adaptable fluid-foil (12, 14) as claimed in any one of claims 1-11 wherein a panel (60, 62) comprises a parent panel (72) and attached to the parent panel is the shape memory element (70).

13. An adaptable fluid-foil (12, 14) as claimed in claim 12 wherein the parent panel (72) is thinner than the shape memory element (70).

14. An adaptable fluid-foil (12, 14) as claimed in any one of claims 12-13 wherein the shape memory element (70) is disposed outwardly of the parent panel (72).

15. An adaptable fluid-foil (12, 14) as claimed in any one of claims 1-14 wherein the shape memory element (70) defines a fluid flow conduit capable of conveying fluid at a temperature to effect a modulus change of the SM element (70) .

16. An adaptable fluid-foil (12, 14) as claimed in any one of claims 2-4 wherein the core structure (64) partly defines a fluid flow conduit capable of conveying fluid at a temperature to effect a modulus change of the SM element (70).

17. An adaptable fluid-foil (12, 14) as claimed in any one of claims 15-16 wherein a temperature regulated supply of fluid and means to regulate the supply (80, 82) is provided.

18. An adaptable fluid-foil (12, 14) as claimed in any one of claims 1-17 wherein the fluid-foil comprises any one of the group comprising a blade (12), a vane (44), rudder, hydrofoil and a propeller.

19. An adaptable fluid-foil (12, 14) as claimed in any one of claims 1-18 wherein the fluid comprises any one of the group comprising gas and liquid.

20. An adaptable fluid-foil (12, 14) as claimed in any one of claims 1-19 wherein the first shape (50) has a camber less than the second shape (50').

21. An adaptable fluid-foil (12, 14) as claimed in any one of claims 1-19 wherein the first shape (50') has a camber greater than the second shape (50).

22. An adaptable fluid-foil (12, 14) as claimed in any one of claims 1-21 wherein the first fluid flow condition comprises a higher Mach number that the second fluid flow condition.

23. An adaptable fluid-foil (12, 14) as claimed in any one of claims 1-21 wherein the first fluid flow condition comprises a lower Mach number that the second fluid flow condition.

24. An adaptable gas turbine engine comprising a fluid-foil as claimed in any one of claims 1-23.

25. A method of operating an adaptable fluid-foil (12, 14) comprising at least two panels (60, 62), the panels (60, 62) are joined at opposing edges (50, 56), in use, a fluid passes over at least part of one of the panels (60, 62) **characterised in that** a panel (60, 62) comprises a shape memory element (70), the method comprising the step of
a) varying the temperature of the shape memory element (70) to change its modulus so that the shape of the fluid-foil changes between a first shape and a second shape, so that, the first shape (50) is optimal for a first fluid flow condition and the second shape (50') is optimal for a second fluid flow condition.

26. A method of operating an adaptable fluid-foil (12, 14) as claimed in claim 25 wherein the first shape (50) has a camber less than the second shape (50').

27. A method of operating an adaptable fluid-foil (12, 14) as claimed in claim 25 wherein the first shape (50') has a camber greater than the second shape (50).

28. A method of operating an adaptable fluid-foil (12, 14) as claimed in any one of claims 25-27 wherein the first fluid flow condition comprises a higher Mach number that the second fluid flow condition.

29. A method of operating an adaptable fluid-foil (12, 14) as claimed in claim 25-28 wherein the first fluid flow condition comprises a lower Mach number that the second fluid flow condition.

30. A method of operating a gas turbine engine comprising a fluid-foil as claimed in any one of claims 25-29.

31. A method of repairing an adaptable fluid-foil (12, 14) comprising at least two panels (60, 62), the panels (60, 62) are joined at opposing edges (50, 56), in use, a fluid passes over at least part of one of the panels (60, 62) **characterised in that** a panel (60, 62) comprises a shape memory element (70), the shape memory element (70) is arranged to change the shape of the fluid-foil between a first shape and a second shape, the method comprising the steps of;
a) removing the SM element (70) and
b) replacing the SM element (70) with an undamaged SM element (70).
